# EUROPEAN PATENT APPLICATION

(11) **EP 4 697 364 A1**
(43) Date of publication of application: **18.02.2026**
(21) Application number: 24788977.7
(22) Date of filing: 09.04.2024
(51) Int. Cl.: G21F 9/30, H05B 6/06, C03B 5/00

(54) **MELT DISCHARGE APPARATUS AND METHOD FOR GLASS MELTING FURNACE IN NUCLEAR POWER PLANT**

(30) Priority: 13.04.2023 KR 20230048660
(71) Applicant: Korea Hydro & Nuclear Power Co., Ltd, Gyeongju-si, Gyeongsangbuk-do 38120 (KR)
(72) Inventor: KIM, Deuk Man, Daejeon 34101 (KR)
(74) Representative: Glawe, Delfs, Moll
(86) International application number: PCT/KR2024/004680
(87) International publication number: WO 2024/215034

(57) **Abstract**

Provided are an apparatus and method for discharging a molten material from a glass melting furnace of a nuclear power plant. The apparatus for discharging the molten material from the glass melting furnace of the nuclear power plant is an apparatus for discharging a molten material from a glass melting furnace of a nuclear power plant and includes a discharge assembly on which a target object containing a molten material is located and which continuously discharges the molten material downward, wherein the discharge assembly includes: a body module; a driving module providing a driving force; a nozzle module for discharging the molten material from the target object; a heating module for heating the nozzle module by induction heating; a first temperature measuring module for obtaining first temperature information according to the heating of the nozzle module; and a second temperature measuring module for obtaining second temperature information, which is temperature information according to the heating of the nozzle module, separately from the first temperature information, wherein the heating module maintains the nozzle module at a set temperature based on the first temperature information and the second temperature information.

## Description

### [Technical Field]

The present disclosure relates to an apparatus and method for discharging a molten material from a glass melting furnace of a nuclear power plant.

### [Background Art]

In handling molten materials resulting from vitrification in a nuclear power plant, it is required to continuously operate a glass melting furnace through periodic or continuous discharge of molten glass after melting the glass at a high temperature. In relation to this, various types of glass discharge methods (e.g., sliding gate discharge, tilting discharge, side discharge, etc.) are applied for continuous or periodic discharge of high-temperature glass melt. In relation to these discharge methods, there is a need for a method that allows continuous or periodic discharge of molten glass to be performed more effectively.

### [Disclosure]

### [Technical Problem]

An aspect of the present disclosure is to enable a discharge apparatus of a glass melting furnace to continuously operate the glass melting furnace effectively at a high temperature.

In particular, the aspect of the present disclosure is to enable stable continuous operation of the entire vitrification facility by installing an opening/closing device which allows a discharge height of a molten material to be adjusted and allows a user to set a discharge time.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided an apparatus for discharging a molten material from a glass melting furnace of a nuclear power plant. The apparatus includes a discharge assembly on which a target object containing a molten material is located and which continuously discharges the molten material downward, wherein the discharge assembly includes: a body module; a driving module providing a driving force; a nozzle module for discharging the molten material from the target object; a heating module for heating the nozzle module by induction heating; a first temperature measuring module for obtaining first temperature information according to the heating of the nozzle module; and a second temperature measuring module for obtaining second temperature information, which is temperature information according to the heating of the nozzle module, separately from the first temperature information, wherein the heating module maintains the nozzle module at a set temperature based on the first temperature information and the second temperature information.

In addition, the nozzle module is located in a hollow area formed in the body module, and the discharge assembly further includes a prevention module for preventing the induction heating from affecting or being affected by external factors, wherein the prevention module includes an upper heat diffusion prevention unit located around at least a portion of the nozzle module and preventing heat diffusion by at least any one of the nozzle module and the heating module.

In addition, the prevention module further includes an interference prevention unit located around at least a portion of the nozzle module and preventing the induction heating of the nozzle module by the heating module from being interfered with.

In addition, the target object is heated by a target object heating unit of an induction heating type, the target object heating unit performs heating based on a first frequency value, the heating module performs heating based on a second frequency value different from the first frequency value, and the interference prevention unit prevents the target object heating unit and the heating module from interfering with each other when operating according to the first frequency value and the second frequency value and is provided as a non-magnetic shielding type.

In addition, the prevention module is located on inner walls in the hollow region of the body module with the nozzle module interposed therebetween, and includes a lower heat diffusion prevention unit for preventing heat diffusion by at least any one of the nozzle module and the heating module.

In addition, the discharge assembly includes an opening/closing module for opening/closing the bottom of the nozzle module, and the opening/closing module includes a first opening/closing unit which performs opening/closing of the nozzle module through positional movement based on the driving force and a second opening/closing unit which performs opening/closing of the nozzle module through positional movement based on the driving force.

In addition, the first opening/closing unit performs the opening/closing through a (1-1)-th movement away from and toward one side of the nozzle module based on the driving force, and the second opening/closing unit performs the opening/closing through a (1-2)-th movement away from and toward the other side of the nozzle module based on the driving force.

In addition, when the first opening/closing unit and the second opening/closing unit correspond to an accommodated state in which molten glass is accommodated in the nozzle module in an amount equal to or greater than a preset reference amount, the (1-1)-th movement and the (1-2)-th movement are performed at a reduced speed compared to a case where the accommodated state is not satisfied..

In addition, the nozzle module has an outlet for discharging the molten material at the bottom, and the first opening/closing unit and the second opening/closing unit have a shape corresponding to that of the nozzle module and come into contact with the nozzle module to close the outlet.

In addition, the bottom of the nozzle module is tapered, and the first opening/closing unit and the second opening/closing unit have a recessed portion corresponding to the nozzle module.

In addition, the first opening/closing unit performs the opening/closing through a (2-1)-th movement away from and toward a lower portion of the one side of the nozzle module based on the driving force, and the second opening/closing unit performs the opening/closing through a (2-2)-th movement away from and toward a lower portion of the other side of the nozzle module based on the driving force.

In addition, the nozzle module includes a metal material that is relaxed by heat, and the first opening/closing unit and the second opening/closing unit perform the (2-1)-th movement and the (2-2)-th movement to reach a position corresponding to the extended state at a reduced speed compared to a case where the extended state is satisfied, when the nozzle module is relaxed and extends downward by an amount equal to or greater than a predetermined reference amount.

According to another aspect of the present disclosure, there is provided a method of discharging a molten material from a glass melting furnace of a nuclear power plant. The method includes continuously discharging a molten material downward from a target object, which is located on a discharge assembly and contains the molten material, by using the discharge assembly, wherein the discharge assembly includes: a body module; a driving module providing a driving force; a nozzle module for discharging the molten material from the target object; a heating module for heating the nozzle module by induction heating; a first temperature measuring module for obtaining first temperature information according to the heating of the nozzle module; and a second temperature measuring module for obtaining second temperature information, which is temperature information according to the heating of the nozzle module, separately from the first temperature information, wherein the heating module maintains the nozzle module at a set temperature based on the first temperature information and the second temperature information.

### [Advantageous Effects]

The present disclosure described above provides at least one of the following effects.

The present disclosure enables a discharge apparatus of a glass melting furnace to continuously operate the glass melting furnace effectively at a high temperature.

In particular, it is possible to continuously operate the entire vitrification facility stably by installing an opening/closing device which allows a discharge height of a molten material to be adjusted and allows a user to set a discharge time.

### [Description of Drawings]

FIG. 1 is a block diagram of an apparatus for discharging a molten material from a glass melting furnace of a nuclear power plant according to an embodiment of the present disclosure;
FIG. 2 is a detailed block diagram of FIG. 1;
FIGS. 3 and 4 illustrate elements of FIG. 1; and
FIG. 5 is a flowchart sequentially illustrating a method of discharging a molten material from a glass melting furnace of a nuclear power plant according to an embodiment of the present disclosure.

### [Best Mode]

The present disclosure discloses an apparatus for discharging a molten material from a glass melting furnace of a nuclear power plant. The apparatus includes a discharge assembly on which a target object containing a molten material is located and which continuously discharges the molten material downward, wherein the discharge assembly includes: a body module; a driving module providing a driving force; a nozzle module for discharging the molten material from the target object; a heating module for heating the nozzle module by induction heating; a first temperature measuring module for obtaining first temperature information according to the heating of the nozzle module; and a second temperature measuring module for obtaining second temperature information, which is temperature information according to the heating of the nozzle module, separately from the first temperature information, wherein the heating module maintains the nozzle module at a set temperature based on the first temperature information and the second temperature information.

### [Mode for Invention]

Hereinafter, exemplary embodiments of the present disclosure will be described in further detail with reference to the attached drawings. Advantages and features of the present disclosure and methods of accomplishing the same may be understood more readily by reference to the following detailed description of exemplary embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the present disclosure to those skilled in the art, and the present disclosure will only be defined by the appended claims. Like reference numerals refer to like elements throughout the specification.

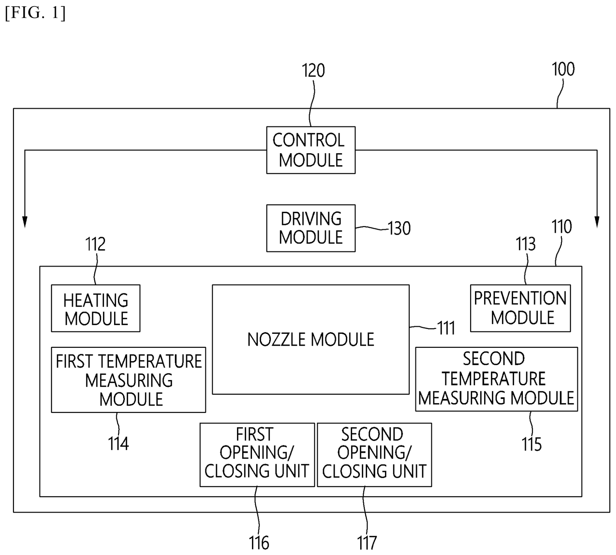

Referring to FIG. 1, an apparatus for discharging a molten material from a glass melting furnace of a nuclear power plant according to an embodiment of the present disclosure includes a discharge assembly 100. The discharge assembly 100 includes a body module 110, a control module 120, and a driving module 130.

The body module 110 includes a nozzle module 111, a heating module 112, a prevention module 113, a first temperature measuring module 114, a second temperature measuring module 115, and an opening/closing module (116, 117). The opening/closing module (116, 117) includes a first opening/closing unit 116 and a second opening/closing unit 117.

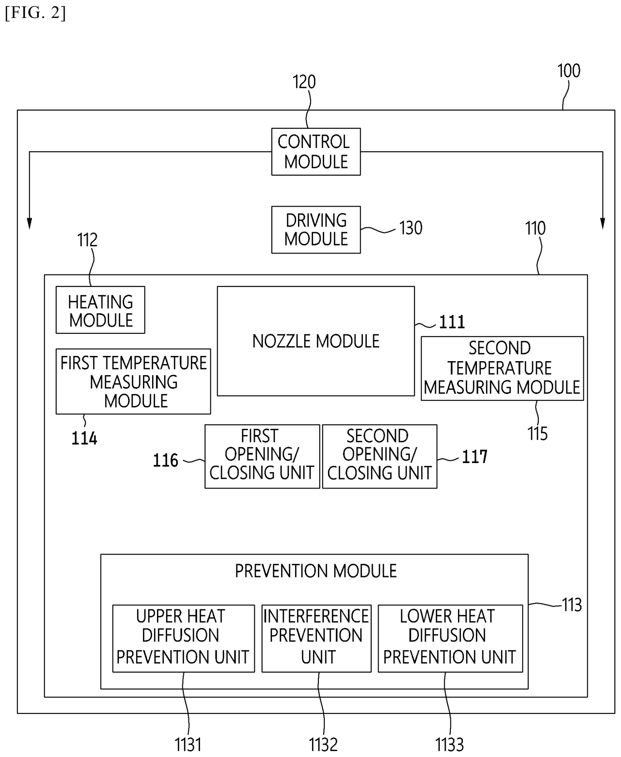

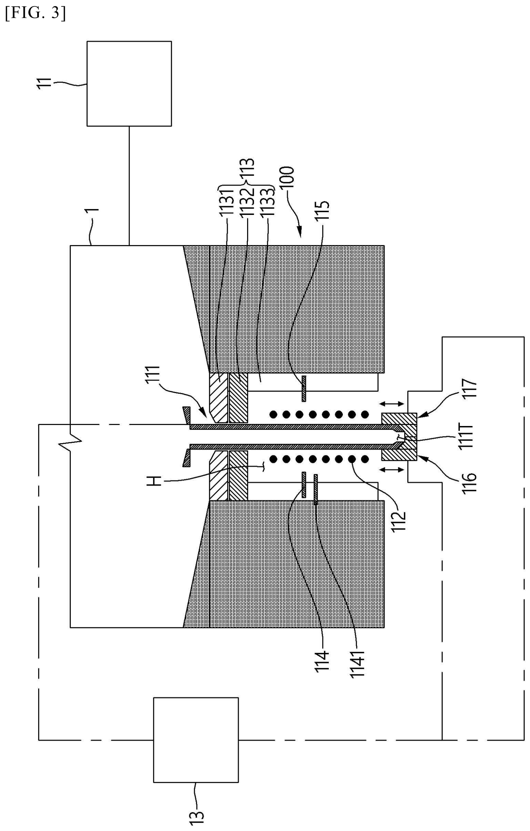

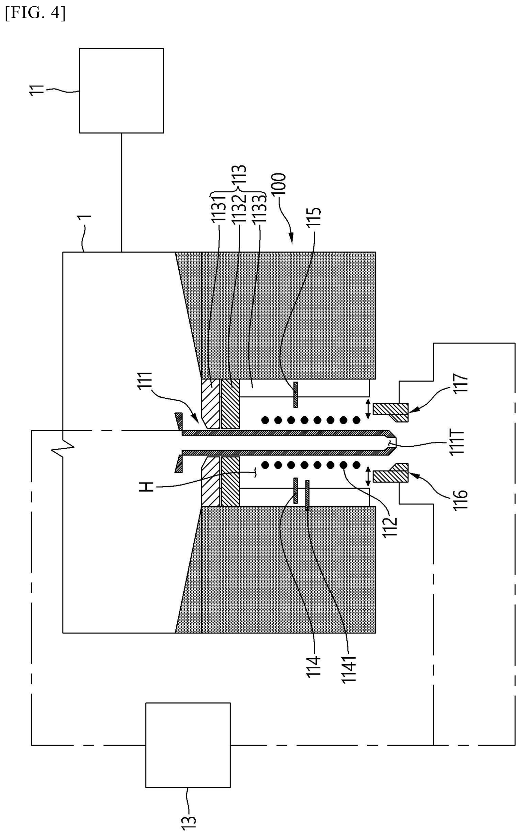

Referring to FIG. 2, the prevention module 113 includes an upper heat diffusion prevention unit 1131, an interference prevention unit 1132, and a lower heat diffusion prevention unit 1133. Referring to FIGS. 3 and 4, the discharge assembly 100, on which a target object 1 containing a molten material is located, continuously discharges the molten material downward.

Here, the body module 110 of the discharge assembly 100 is provided according to a preset standard. The driving module 130 provides a driving force necessary for the operation of the discharge assembly 100.

The nozzle module 111 discharges the molten material from the target object 1. The heating module 112 heats the nozzle module 111 by induction heating. The first temperature measuring module 114 obtains first temperature information according to the heating of the nozzle module 111.

In addition, the second temperature measuring module 115 obtains second temperature information, which is temperature information according to the heating of the nozzle module 111, separately from the first temperature information. The control module 120 controls the nozzle module 111 to be maintained at a set temperature through the heating module 112.

The control module 120 controls the heating module 112 to maintain the nozzle module 111 at the set temperature based on the first temperature information and the second temperature information. The nozzle module 111 is located in a hollow area H formed in the body module 110.

The prevention module 113 of the discharge assembly 100 serves to prevent the induction heating from affecting or being affected by external factors. The upper heat diffusion prevention unit 1131 of the prevention module 113 is located around at least a portion of the nozzle module 111.

In addition, the upper heat diffusion prevention unit 1131 serves to prevent heat diffusion by at least any one of the nozzle module 111 and the heating module 112. The interference prevention unit 1132 of the prevention module 113 is located around at least a portion of the nozzle module 111.

In addition, the interference prevention unit 1132 serves to prevent the induction heating of the nozzle module 111 by the heating module 112 from being interfered with.

The target object 1 is heated by a target object heating unit 11 of an induction heating type. The target object heating unit 11 performs heating based on a first frequency value. In addition, the heating module 112 performs heating based on a second frequency value different from the first frequency value.

The interference prevention unit 1132 prevents the target object heating unit 11 and the heating module 112 from interfering with each other when operating according to the first frequency value and the second frequency value. To this end, it is provided as, for example, a non-magnetic shielding type.

In addition, the prevention module 113 is located on inner walls in the hollow region of the body module 110 with the nozzle module 111 interposed therebetween. The lower heat diffusion prevention unit 1133 serves to prevent heat diffusion by at least any one of the nozzle module 111 and the heating module 112.

The opening/closing module (116, 117) of the discharge assembly 100 serves to open/close the bottom of the nozzle module 111. The first opening/closing unit 116 of the opening/closing module (116, 117) performs opening/closing of the nozzle module 111 through positional movement based on the driving force.

The second opening/closing unit 117 of the opening/closing module (116, 117) performs opening/closing of the nozzle module 111 through positional movement based on the driving force. The first opening/closing unit 116 performs the opening/closing through a (1-1)^{th} movement away from and toward one side of the nozzle module 111 based on the driving force.

In addition, the second opening/closing unit 117 performs the opening/closing through a (1-2)^{th} movement away from and toward the other side of the nozzle module 111 based on the driving force.

The first opening/closing unit 116 and the second opening/closing unit 117 may correspond to an accommodated state in which molten glass is accommodated in the nozzle module 111 in an amount equal to or greater than a preset reference amount.

In this case, the (1-1)^{th} movement and the (1-2)^{th} movement are performed at a reduced speed compared to a case where the accommodated state is not satisfied. The nozzle module 111 has an outlet for discharging the molten material at the bottom.

The first opening/closing unit 116 and the second opening/closing unit 117 have a shape corresponding to that of the nozzle module 111 and come into contact with the nozzle module 111 to close the outlet.

The bottom of the nozzle module 111 is tapered. The first opening/closing unit 116 and the second opening/closing unit 117 have a recessed portion corresponding to the nozzle module 111.

The first opening/closing unit 116 performs the opening/closing through a (2-1)^{th} movement away from and toward a lower portion of the one side of the nozzle module 111 based on the driving force.

Here, the second opening/closing unit 117 performs the opening/closing through a (2-2)^{th} movement away from and toward a lower portion of the other side of the nozzle module 111 based on the driving force.

The nozzle module 111 includes a metal material that is relaxed by heat. The first opening/closing unit 116 and the second opening/closing unit 117 may correspond to an extended state in which the nozzle module 111 is relaxed and stretched downward by a preset reference amount or more.

In this case, the first opening/closing unit 116 and the second opening/closing unit 117 perform the (2-1)^{th} movement and the (2-2)^{th} movement to reach a position corresponding to the extended state at a reduced speed compared to a case where where the extended state is not satisfied.

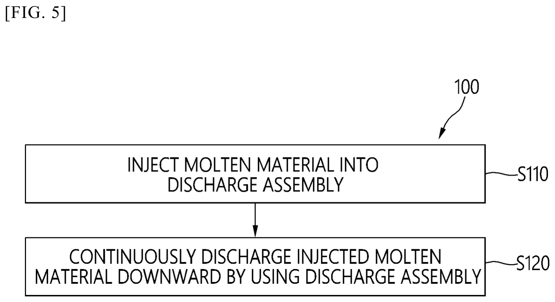

FIG. 5 is a flowchart sequentially illustrating a method S100 of discharging a molten material from a glass melting furnace of a nuclear power plant according to an embodiment of the present disclosure. Referring to FIG. 5, in the method S100 of discharging the molten material from the glass melting furnace of the nuclear power plant, a discharge assembly 100 continuously discharges the molten material downward from a target object 1 located on the discharge assembly 100 and containing the molten material.

The discharge assembly 100 includes a body module 110, a driving module 120 providing a driving force, and a nozzle module 111 for discharging the molten material from the target object 1.

In addition, a heating module 112 for heating the nozzle module 111 by induction heating and a first temperature measuring module 114 for obtaining first temperature information according to the heating of the nozzle module 111 are included.

In addition, a second temperature measuring module 115 for obtaining second temperature information, which is temperature information according to the heating of the nozzle module 111, separately from the first temperature information is included. Here, the heating module 112 maintains the nozzle module 111 at a set temperature based on the first temperature information and the second temperature information.

While the present disclosure has been particularly shown and described with reference to exemplary embodiments thereof, it will be understood by those of ordinary skill in the art that various changes in form and detail may be made therein without departing from the spirit and scope of the present disclosure as defined by the following claims. The exemplary embodiments should be considered in a descriptive sense only and not for purposes of limitation.

## Claims

1. An apparatus for discharging a molten material from a glass melting furnace of a nuclear power plant, the apparatus comprising a discharge assembly on which a target object containing a molten material is located and which continuously discharges the molten material downward, wherein the discharge assembly comprises:
a body module;
a driving module providing a driving force;
a nozzle module for discharging the molten material from the target object;
a heating module for heating the nozzle module by induction heating;
a first temperature measuring module for obtaining first temperature information according to the heating of the nozzle module; and
a second temperature measuring module for obtaining second temperature information, which is temperature information according to the heating of the nozzle module, separately from the first temperature information,
wherein the heating module maintains the nozzle module at a set temperature based on the first temperature information and the second temperature information.

2. The apparatus of claim 1, wherein the nozzle module is located in a hollow area formed in the body module, and the discharge assembly further comprises a prevention module for preventing the induction heating from affecting or being affected by external factors, wherein the prevention module comprises an upper heat diffusion prevention unit located around at least a portion of the nozzle module and preventing heat diffusion by at least any one of the nozzle module and the heating module.

3. The apparatus of claim 2, wherein the prevention module further comprises an interference prevention unit located around at least a portion of the nozzle module and preventing the induction heating of the nozzle module by the heating module from being interfered with.

4. The apparatus of claim 3, wherein the target object is heated by a target object heating unit of an induction heating type, the target object heating unit performs heating based on a first frequency value, the heating module performs heating based on a second frequency value different from the first frequency value, and the interference prevention unit prevents the target object heating unit and the heating module from interfering with each other when operating according to the first frequency value and the second frequency value and is provided as a non-magnetic shielding type.

5. The apparatus of claim 2, wherein the prevention module is located on inner walls in the hollow region of the body module with the nozzle module interposed therebetween, and comprises a lower heat diffusion prevention unit for preventing heat diffusion by at least any one of the nozzle module and the heating module.

6. The apparatus of claim 1, wherein the discharge assembly comprises an opening/closing module for opening/closing the bottom of the nozzle module, and the opening/closing module comprises a first opening/closing unit which performs opening/closing of the nozzle module through positional movement based on the driving force and a second opening/closing unit which performs opening/closing of the nozzle module through positional movement based on the driving force.

7. The apparatus of claim 6, wherein the first opening/closing unit performs the opening/closing through a (1-1)-th movement away from and toward one side of the nozzle module based on the driving force, and the second opening/closing unit performs the opening/closing through a (1-2)-th movement away from and toward the other side of the nozzle module based on the driving force.

8. The apparatus of claim 7, wherein when the first opening/closing unit and the second opening/closing unit correspond to an accommodated state in which molten glass is accommodated in the nozzle module in an amount equal to or greater than a preset reference amount, the (1-1)-th movement and the (1-2)-th movement are performed at a reduced speed compared to a case where the accommodated state is not satisfied.

9. The apparatus of claim 6, wherein the nozzle module has an outlet for discharging the molten material at the bottom, and the first opening/closing unit and the second opening/closing unit have a shape corresponding to that of the nozzle module and come into contact with the nozzle module to close the outlet.

10. The apparatus of claim 9, wherein the bottom of the nozzle module is tapered, and the first opening/closing unit and the second opening/closing unit have a recessed portion corresponding to the nozzle module.

11. The apparatus of claim 7, wherein the first opening/closing unit performs the opening/closing through a (2-1)-th movement away from and toward a lower portion of the one side of the nozzle module based on the driving force, and the second opening/closing unit performs the opening/closing through a (2-2)-th movement away from and toward a lower portion of the other side of the nozzle module based on the driving force.

12. The apparatus of claim 11, wherein the nozzle module comprises a metal material that is relaxed by heat, and wherein the first opening/closing unit and the second opening/closing unit perform the (2-1)-th movement and the (2-2)-th movement to reach a position corresponding to the extended state at a reduced speed compared to a case where the extended state is not satisfied, when the nozzle module is relaxed and extends downward by an amount equal to or greater than a predetermined reference amount.

13. A method of discharging a molten material from a glass melting furnace of a nuclear power plant, the method comprising continuously discharging a molten material downward from a target object, which is located on a discharge assembly and contains the molten material, by using the discharge assembly, wherein the discharge assembly comprises:
a body module;
a driving module providing a driving force;
a nozzle module for discharging the molten material from the target object;
a heating module for heating the nozzle module by induction heating;
a first temperature measuring module for obtaining first temperature information according to the heating of the nozzle module; and
a second temperature measuring module for obtaining second temperature information, which is temperature information according to the heating of the nozzle module, separately from the first temperature information,
wherein the heating module maintains the nozzle module at a set temperature based on the first temperature information and the second temperature information.
